# EUROPEAN PATENT APPLICATION

(11) **EP 1 703 516 A1**
(43) Date of publication of application: **20.09.2006**
(21) Application number: 06110645.6
(22) Date of filing: 03.03.2006
(51) Int. Cl.: G11B 27/10

(54) **Multi-source cache management reproducing apparatus and method e.g. for Blu ray Disk-ROM.**

(30) Priority: 15.03.2005 JP 2005074023
(71) Applicant: KABUSHIKI KAISHA TOSHIBA, Tokyo 105-8001 (JP)
(72) Inventor: Yamagata, Yoichiro Toshiba Corporation, Minato-ku Tokyo 105-8001 (JP); Taira, Kazuhiko Toshiba Corporation, Minato-ku Tokyo 105-8001 (JP); Mimura, Hideki Toshiba Corporation, Minato-ku Tokyo 105-8001 (JP); Ishibashi, Yasuhiro Toshiba Corporation, Minato-ku Tokyo 105-8001 (JP); Kobayashi, Takero Toshiba Corporation, Minato-ku Tokyo 105-8001 (JP); Nakamura, Seiichi Toshiba Corporation, Minato-ku Tokyo 105-8001 (JP); Shuto, Eita Toshiba Corporation, Minato-ku Tokyo 105-8001 (JP); Tsumagari, Yasufumi Toshiba Corporation, Minato-ku Tokyo 105-8001 (JP); Kaneko, Toshimitsu Toshiba Corporation, Minato-ku Tokyo 105-8001 (JP); Kamibayashi, Tooru Toshiba Corporation, Minato-ku Tokyo 105-8001 (JP); Toyama, Haruhiko Toshiba Corporation, Minato-ku Tokyo 105-8001 (JP); Kawabata, Shunichi Toshiba Corporation, Minato-ku Tokyo 105-8001 (JP)
(74) Representative: Henkel, Feiler & Hänzel

(57) **Abstract**

The contents of a DVD video disc can be reproduced by use of reproduction control information realized by a Markup language. It is possible to hold a resource whose life period has elapsed in a cache memory (602) and use the resource again. Therefore, a data access manager (601), a file cache (621) which temporarily stores a plurality of resources and a navigation manager (including a filecache manager (603)) which processes management information used to manage a plurality of files held in the file cache (621) and controls the data access manager are provided. The filecache manager (603) registers a loaded resource into a first list if the resource lies within the life period and registers the resource into a second list and manages the same if the life period of the resource has expired.

## Description

This invention relates to an information reproducing method and information reproducing apparatus and more particularly to an apparatus and method for reproducing information from an information storage medium such as an optical disc, and an information management method.

Recently, DVD video discs having high image quality and highly sophisticated functions and video players which reproduce the discs are widely used. Further, enhancement of interactivity, extension of contents and flexibility of the offered environment of the contents are desired to be provided in addition to realization of the high image quality by the contents suppliers and users. An apparatus which can deal with still picture image data photographed by the user or subtitle texts acquired by connection to the Internet in the following fashion is also desired to be developed. That is, it is desired to set a reproducing environment in which the user can freely specify the reproduction position, reproduction area or reproduction time and reproduce information. As the technique similar to the above technique, the technique for forming various menus by changing colors and contrasts of characters is disclosed in Jpn. Pat. Appln. KOKAI Publication No. H10-50036.

As described above, it is desired to further enhance the function and flexibility of a system having the DVD video discs whose image quality and function are enhanced and the video players thereof.

An object of the embodiments is to reproduce the contents recorded on a recording medium such as a DVD video disc by use of reproduction control information realized by Markup languages or the like. An environment is provided in which the order of reproduction of video objects and other additional information items can be freely set and the flexibility of the reproduction order can be expanded. Further, an environment is provided in which the reproduced contents or files can be temporality stored in a cache memory and data access can be simplified.

In order to achieve the above object, an apparatus according to one embodiment of this invention includes a data access manager, a file cache which temporarily stores a plurality of resources (archived data or files) acquired by the data access manager, and a navigation manager which performs a process of management information used to manage a plurality of files stored in the file cache and controls the data access manager, wherein a timeline is defined and playlist information used to map the plurality of resources on the timeline is contained in the management information. The navigation manager (containing a file cache manager) loads and maps the plurality of files in the file cache according to the playlist information and the file cache manager registers information which specifies the resource in a life period into a first list if the loaded resource lies within the life period. Further, it registers information which specifies a resource into a second list and manages the information if the loaded resource has passed through the life period.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing information contents recorded on a disc-like information storage medium (optical disc or the like) 1 according to one embodiment of this invention;
FIG. 2 is a diagram showing one example of a file system which manages contents recorded on a disc-like information storage medium according to one embodiment of this invention;
FIG. 3 is a diagram showing one example of recording contents of an advanced contents recording area among information contents recorded on a disc-like information storage medium (optical disc or the like) 1 according to another embodiment of this invention;
FIG. 4 is a diagram showing one example of recording contents of an advanced HD video title set (AHDVTS) recording area among information contents recorded on a disc-like information storage medium (optical disc or the like) 1 according to another embodiment of this invention;
FIG. 5 is a diagram schematically showing an example of a reproduction system model of advanced contents;
FIG. 6 is a diagram for illustrating one example of a data flow in a reproduction system model of advanced contents;
FIG. 7 is a diagram schematically showing one example of load start time and reproduction time of respective objects on the timeline;
FIG. 8 is a flowchart for illustrating one example of a process of a reproduction system corresponding to the example of FIG. 7;
FIG. 9 is a diagram for illustrating an example of description of object mapping information (an example of each application);
FIG. 10 is a diagram showing an example of the relation between the timeline and the playlist;
FIG. 11 is a diagram for illustrating an example of description of object mapping information (an example of each application);
FIG. 12 is a diagram showing a system model of a reproduction system according to one embodiment of this invention;
FIG. 13 is a diagram showing one example of the playlist which realizes the reproducing operation in the system model of FIG. 12;
FIG. 14 is a diagram showing a case wherein the example of FIG. 13 is arranged on the timeline;
FIG. 15 is an explanatory diagram showing the data storage state in a file cache according to this invention;
FIG. 16 is an explanatory diagram showing a format of archived data according to this invention;
FIG. 17 is an explanatory diagram showing an example of specification information used when archived data according to this invention is read out;
FIGS. 18A and 18B are explanatory diagrams showing an example of information used when the file cache manager forms resource information and an example of specification of a loading period and life period on the timeline of the archived file;
FIG. 19 is an explanatory diagram for illustrating the relation between resource information and resource management information according to this invention; and
FIG. 20 is an explanatory diagram showing an example of the directory structure in a file cache according to this invention.

There will now be described embodiments of this invention with reference to the accompanying drawings. First, the contents, management information, script and the like and the reproduction environment thereof according to this invention are explained. In a normal DVD video disc (ROM-series disc), the reproduction order of video objects (which are called VOB or EVOB) to be reproduced is determined based on program chain (PGC) information. The PGC is determined by the contents manufacturer and previously recorded on a disc. Therefore, the video objects to be reproduced and the reproduction order thereof are determined when the disc is formed and they cannot be changed after the disc was formed. When the contents manufacturer wants to change the video objects to be reproduced and the reproduction order thereof, he is required to newly reform management information of the DVD video disc and record the changed PGC on a new disc. The user is required to buy a DVD video disc on which the changed PGC is recorded.

Therefore, with the technique of this invention, the video objects to be reproduced and the reproduction order thereof can be freely controlled by use of reproduction control information realized by Markup languages with respect to the contents recorded on the DVD video disc. In other words, an environment in which the degree of freedom of the reproduction sequence can be expanded with respect to the contents recorded on a reproduce-only information storage medium such as a DVD video disc is provided. Further, an environment in which the contents recorded on a DVD disc can be variously utilized is provided.

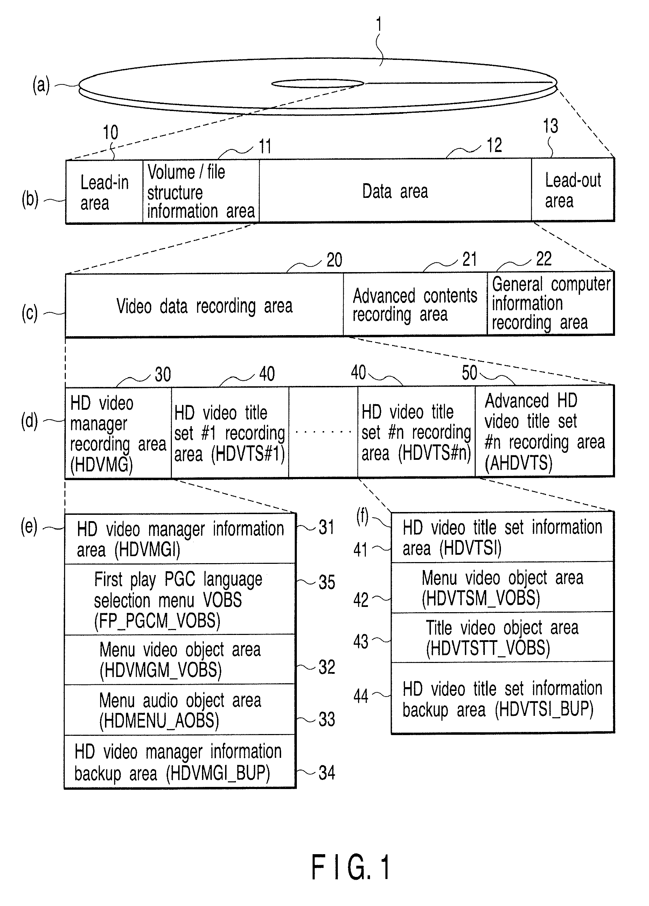

FIG. 1 is a diagram showing the information contents recorded on a disc-like information storage medium 1 according to one embodiment of this invention. The information storage medium 1 shown in (a) of FIG. 1 can be configured by a high density optical disc (high density or high definition digital versatile disc: HD_DVD) using an infrared laser with the wavelength of 650 nm or blue laser with the wavelength of 405 nm or less, for example.

As shown in (b) of FIG. 1, the information storage medium 1 is configured to include a lead-in area 10, data area 12 and lead-out area 13 arranged in this order from the inner peripheral side. The information storage medium 1 uses a bridge structure of UDF and ISO9660 in a file system and has a volume/file structure information area 11 of ISO9660 and UDF on the lead-in side of the data area 12.

As shown in (c) of FIG. 1, in the data area 12, a video data recording area 20 in which DVD contents (which are also called standard contents or SD contents), another video data recording area (advanced contents recording area in which advanced contents are recorded) 21 and a general computer information recording area 22 arranged together (in this case, the term "contents" expressed in a plural form also indicates a "content" expressed in a singular form and the "content" contains the meaning of a representative singular form of "contents").

As shown in (d) of FIG. 1, the video data recording area 20 is configured to include an HD video manager (HDVMG: High Definition Correspondence Video Manager) recording area 30 in which management information associated with the whole portion of the HD_DVD video contents recorded in the video data recording area 20 is recorded, an HD video title set (HDVTS: High Definition Correspondence Video Title Set: which is also called a standard VTS) recording area 40 in which management information and video information (video objects) collected for each title are recorded for each title, and an advanced HD video title set (AHDVTS: which is also called an advanced VTS) recording area 50.

As shown in (e) of FIG. 1, the HD video manager (HDVMG) recording area 30 is configured to include an HD video manager information (HDVMGI: High Definition Correspondence Video Manager Information) area 31 for management information associated with the whole portion of the video data recording area 20, an HD video manager information backup (HDVMGI_BUP) area 34 in which exactly the same information as that of the HD video manager information area 31 is recorded for backup, and a menu video object (HDVMGM_VOBS) area 32 in which a top menu screen indicating the whole portion of the video data recording area 20 is recorded.

According to one embodiment of this invention, a menu audio object (HDMENU_AOBS) area 33 in which audio information output in parallel at the menu display time is recorded is newly provided in the HD video manager recording area 30. Further, according to one embodiment of this invention, a screen on which a menu descriptive language code or the like can be set in an area of language selection menu VOBS (FP_PGCM_VOBS) 35 for first play PGC executed at the time of first access immediately after the disc (information storage medium) 1 is loaded on the disc drive can be recorded.

The internal portion of one HD video title set (HDVTS) recording area 40 in which management information and video information (video objects) for each title are recorded together is configured to include an HD video title set information (HDVTSI) area 41 in which management information with respect to the whole contents of the HD video title set recording area 40 is recorded, an HD video title set information backup (HDVTSI_BUP) area 44 in which exactly the same information as that of the HD video title set information area 41 is recorded as the backup data thereof, a menu video object area (HDVTSM_VOBS) 42 in which information of a menu screen is recorded in the video title set unit, and a title video object (HDVTSTT_VOBS) area 43 in which video object data (video information of the title) in the video title set is recorded.

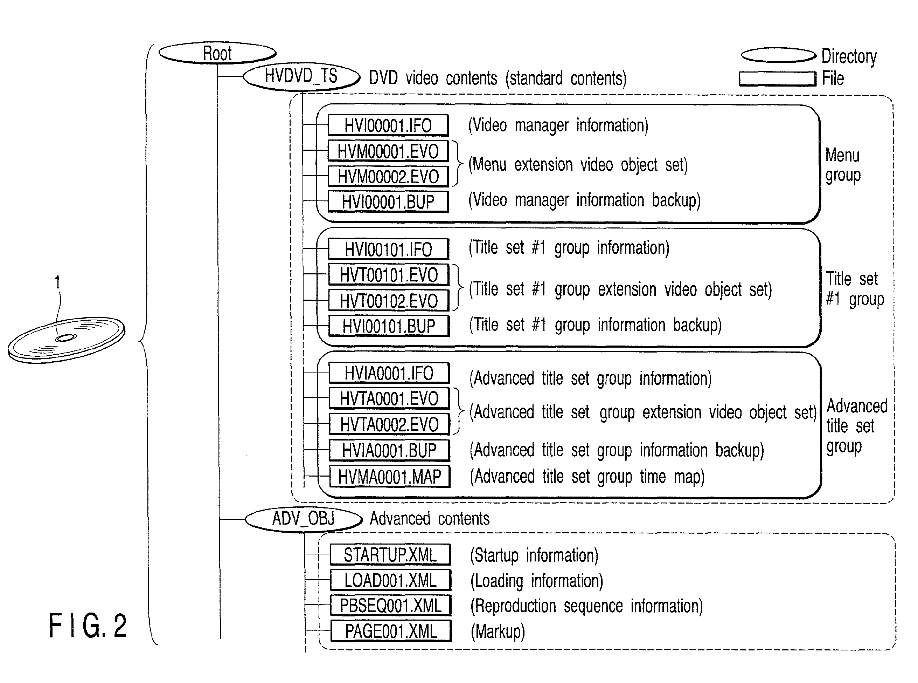

FIG. 2 is a diagram showing one example of a file system which manages contents recorded on a disc-like information storage medium according to one embodiment of this invention. Each area (30, 40) of FIG. 1 configures a different file in a file system having the bridge structure of UDF and ISO9660. The conventional DVD video contents (the DVD video contents of the standard SD) are arranged together under the directory having the name of "VIDEO_TS". On the other hand, as shown in FIG. 2 as an example, the file according to one embodiment of this invention has a configuration in which an HVDVD_TS directory in which an information file dealing with high definition video data is stored and an ADV_OBJ directory in which an information file dealing with an advanced object is stored are arranged under the route directory.

The contents of the HVDVD_TS directory are roughly divided into a file group belonging to a menu group utilized for menus and a file group belonging to a title set group utilized for titles. In the file group belonging to the menu group, an information file (HVI00001.IFO) for the video manager having information used to manage the whole portion of the disc, a backup file (HVI00001.BUP) thereof and reproduction data files (HVM00001.EVO to HVM00003.EVO) of menu extension video object sets utilized as the background screen of the menu are stored.

In the file group belonging to the group of the title set #n (title set #1 group or the like), an information file (HVIxxx01.IFO: xxx = 001 to 999) for the video title set having information used to manage the title set #n, a backup file (HVIxxx01.BUP: xxx = 001 to 999) thereof and a reproduction data files (HVTxxxyy.EVO: xxx = 001 to 999, yy = 01 to 99) of the extension video object set for the title set #n used as a title are stored.

Further, in the file group belonging to the advanced title set group, an information file (HVIA0001.IFO) for the video title set having information used to manage the advanced title set, a backup file (HVIA0001.BUP) thereof, a reproduction data files (HVTAxxyy.EVO: xx = 01 to 99, yy = 01 to 99) of the extension video object set for the advanced title set used as a title, a time map information file (HVMAxxxx.MAP: xxxx = 0001 to 9999) for the advanced title set and a backup file (HVMAxxxx.BUP: xxxx = 0001 to 9999, not shown in the drawing) thereof are stored.

In the ADV_OBJ directory file, a startup information file (STARTUP.XML), loading information file (LOAD001.XML), reproduction sequence information file (PBSEQ001.XML), markup language file (PAGE001.XML), moving picture data, animation data, still picture data, audio data file, font data file and the like are stored. In this case, for example, the contents of the startup information file are used as startup information of the moving picture data, animation data, still picture data, audio data, font data and data of markup languages used to control reproduction of the above data items. In the loading information file, loading information (which can be described by use of the Markup language/Script language/StyleSheet or the like) in which information related to a file to be loaded in the buffer of the reproduction apparatus is described is recorded.

In the reproduction sequence information file (PBSEQ001.XML), reproduction sequence information (which is also described by use of the Markup language or the like) indicating what portion of the reproduction data file of the extension video object set for the advanced title set in the advanced title set group is reproduced is recorded.

The Markup language is a language described according to a command in which attributes of characters are previously defined and can be used to give the type, size, color and the like of a font as the attributes with respect to a character string. In other words, the Markup language is a descriptive language with which the structure of a sentence (such as a title and hyperlink) and modifier information (such as the size of characters, the state of typesetting and the like) are described in the sentence by surrounding part of the document by use of a special character string called a "tag".

Since a document written by use of the Markup language is used as a text file, a person can normally read and edit the document by use of a text editor. As the representative Markup language, standard generalized markup language (SGML), hyper text markup language (HTML) developed from SGML, TeX and the like are provided.

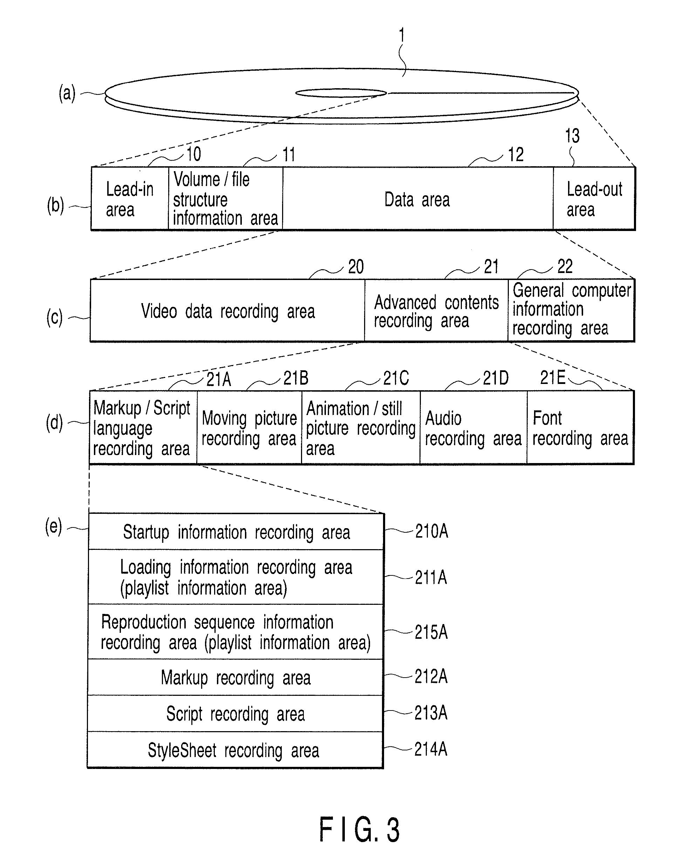

FIG. 3 is a diagram showing one example of the recording contents of an advanced contents recording area among the information contents recorded on a disc-like information storage medium (optical disc or the like) 1 according to another embodiment of this invention. As shown in (d) of FIG. 3, an advanced contents recording area 21 shown in (c) of FIG. 3 is configured to include a moving picture recording area 21B in which moving picture data is recorded, an animation/still picture recording area 21C in which animation data and still picture data are recorded, an audio recording area 21D in which audio data is recorded, a font recording area 21E in which font data is recorded, and a Markup/Script language recording area 21A in which information (which is configured by the Markup language/Script language/StyleSheet and the like) used to control reproduction of the above data items is recorded (the recording order of the above areas is set such that the area 21A comes first as shown in the drawing).

In the information used to control the reproduction (recording contents of the area 21A), a reproduction method (display method, reproduction procedure, reproduction switching procedure, selection procedure of a to-be-reproduced object or the like) of advanced contents (which are configured to include audio, still picture, font, text, moving picture, animation or the like) and/or DVD contents is described by use of the Markup language, Script language and style sheet (StyleSheet). For example, hyper text markup language (HTML)/extensible hyper text markup language (XHTML) and synchronized multimedia integration language (SMIL) can be combined and used as the Markup language. As the Script language, a Script language such as european computer manufacturers association (ECMA) Script and JavaScript (Java is a registered trademark) and StyleSheet such as cascading style sheet (CSS) can be combined and used.

Further, the Markup/Script language recording area 21A is configured to include a startup recording area 210A in which startup information is recorded, a loading information recording area 211A in which information of a file loaded in the buffer of the reproduction apparatus, a reproduction sequence information recording area 215A which defines the video reproduction order when HD_DVD video data stored in the extension video object set of the advanced title set is reproduced by use of the Markup language and Script language, a Markup recording area 212A in which the Markup language is recorded, a Script recording area 213A in which the Script language is recorded and a StyleSheet recording area 214A in which the StyleSheet is recorded.

The loading information recording area 211A and reproduction sequence information recording area 215A shown in (e) of FIG. 3 can be used as an area to store playlist information.

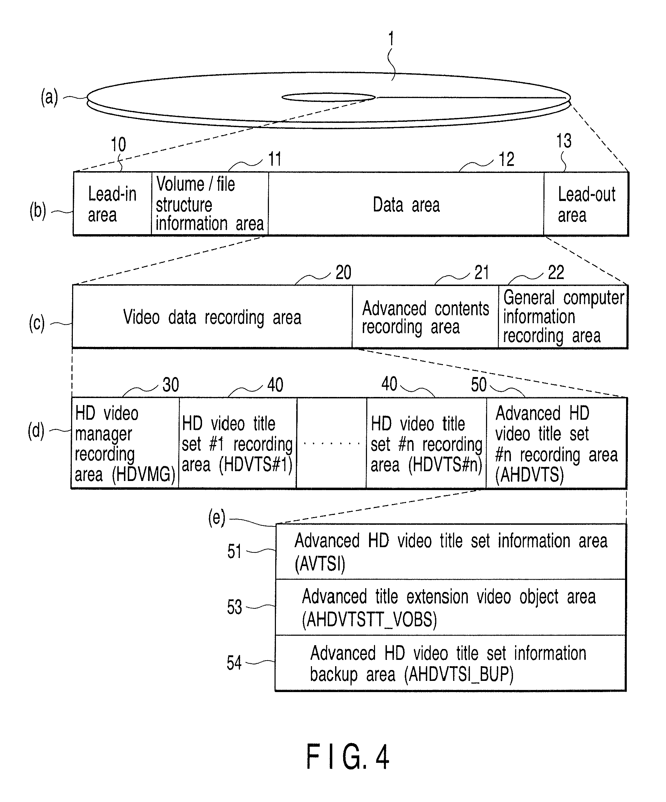

FIG. 4 is a diagram showing one example of the recording contents of an advanced HD video title set recording area among the information contents recorded on a disc-like information storage medium (optical disc or the like) 1 according to another embodiment of this invention. An advanced HD video title set (AHDVTS: advanced VTS) shown in (d) of FIG. 4 is a video object specialized to be referred to based on the Markup language which is one of the advanced contents.

As shown in (e) of FIG. 4, the contents of the advanced HD video title set (AHDVTS) recording area 50 is configured to include an advanced HD video title set information (AHDVTSI) area 51 in which management information for all of the contents of the advanced HD video title set recording area 50 is recorded, an advanced HD video title set information backup area (AHDVTSI_BUP) 54 used to record information which is backup data thereof and is exactly the same as that of the advanced HD video title set information area 51, and an advanced title video object area (AHDVTSTT_VOBS) 53 in which video object (video information of the title) data in the advanced HD video title set is recorded.

Although not shown in the drawing, the contents of the advanced HD video title set information (AHDVTSI) area 51 shown in (e) of FIG. 4 and collectively recorded in the HVIA0001.IFO (or VTSA0100.IFO which is not shown in the drawing) file shown in FIG. 2 are divided into various areas (management information groups) of an advanced HD video title set information management table (AHDVTSI_MAT), advanced HD video title set PTT search pointer table (AHDVTS_PTT_SRPT), advanced HD video title set program chain information table (AHDVTS_PGCIT), advanced HD video title set cell address table (AHDVTS_C_ADT) and time map information table (TMAPIT).

The time map information table (TMAPIT) is part of the advanced HD video title set information (AHDVTSI) area 51. However, it can be recorded as a file (HVIA0001.IFO) which is the same as the advanced HD video title set information area 51 or as a file (HVM00000.MAP) which is independent from the advanced HD video title set information area 51.

In the advanced HD video title set information management table (AHDVTSI_MAT), management information which is common for corresponding video title sets is recorded. By arranging the common management information in the first area (management information group) of the advanced HD video title set information (AHDVTSI) area 51, the common management information in the video title set can be instantly read out, and therefore, the reproduction control process of the information reproduction apparatus can be simplified and the control processing time can be shortened.

The advanced HD video title set information management table (AHDVTSI_MAT) can store the following information as the common management information in the video title set. That is, the advanced HD video title set information management table is configured to store various information items such as an advanced HD video title set identifier (AHDVTS_ID), an end address (AHDVTS_EA) of the advanced HDVTS, an end address (AHDVTSI_EA) of the advanced HDVTSI, a version number (VERN) of the HD_DVD video standard, an AHDVTS category type (AHDVTS_CAT), an end address (AHDVTSI_MAT_EA) of AHDVTSI_MAT, a start address (AHDVTSTT_VOBS_SA) of AHDVTSTT_VOBS, a start address (AHDVTS_PTT_SRPT_SA) of AHDVTS_PTT_SRPT, a start address (AHDVTS_PGCIT_SA) of AHDVTS_PGCIT, a start address (AHDVTS_C_ADT_SA) of AHDVTS_C_ADT, the number of angles (ATR1_AGL_Ns) of the video object having the attribute information 1 (ATR1), a video attribute (ATR1_V_ATR) of the video object having the attribute information 1 (ATR1), the number of audio streams (ATR1_AST_Ns) of the video object having the attribute information 1 (ATR1), an audio stream attribute table (ATR1_AST_ATRT) of the video object having the attribute information 1 (ATR1), the number of sub picture streams (ATR1_SPST_Ns) of the video object having the attribute information 1 (ATR1), a sub picture stream attribute table (ATR1_SPST_ATRT) of the video object having the attribute information 1 (ATR1), a multichannel audio stream attribute table (ATR1_MU_AST_ATRT) (attribute information 2, attribute information 3 follow after this) of the video object having the attribute information 1 (ATR1).

The start address (HDVTSM_VOBS_SA) of HDVTSM_VOBS existing in the standard VTS among the information items which can be stored in the advanced HD video title set information management table (AHDVTSI_MAT) can be omitted (or can be used as a reservation area) since HDVTSM_VOBS is not present in the advanced VTS. Further, the start address (HDVTSM_PGCI_UT_SA) of HDVTSM_PGCI_UT existing in the standard VTS can be omitted (or can be used as a reservation area) since HDVTSM_VOBS is not present in the advanced VTS. Also, the start address (HDVTSM_C_ADT_SA) of HDVTSM_C_ADT existing in the standard VTS can be omitted (or can be used as a reservation area) since HDVTSM is not present in the advanced VTS. In addition, the start address (HDVTSM_VOBU_ADMAP_SA) of HDVTSM_VOBU_ADMAP existing in the standard VTS can be omitted (or can be used as a reservation area) since HDVTSM is not present in the advanced VTS. Further, the start address (HDVTS_VOBU_ADMAP_SA) of HDVTS_VOBU_ADMAP existing in the standard VTS can be omitted (or can be used as a reservation area) since a time map information table which can be used instead thereof is present in the advanced VTS.

The information (AHDVTS_CAT) indicating the category of the advanced VTS stored in the advanced HD video title set information management table (AHDVTSI_MAT) can be defined as follows.
AHDVTS CAT = 0000b: category of AHDVTS is not specified;
AHDVTS_CAT = 0001b: reservation;
AHDVTS_CAT = 0010b: advanced VTS accompanied by advanced contents;
AHDVTS_CAT = 0011b: advanced VTS which is not accompanied by advanced contents;
AHDVTS_CAT = others: reservation:

In this case, the "advanced VTS accompanied by the advanced contents" in which the category is indicated by "AHDVTS_CAT = 0010b" indicates the advanced VTS basically configured to accompany the Markup language. That is, in the category, the contents manufacturer assumes the "advanced VTS controlled by use of the Markup language", information can be reproduced only according to the control operation of the Markup language and the advanced VTS is not permitted to be reproduced in a single form. For example, when the contents manufacturer describes the Markup language which permits reproduction of the advanced VTS in a certain period only under a specified condition, the advanced VTS of the above period can be reproduced in a condition other than the specified condition if the advanced VTS is permitted to be reproduced in a single form. The above reproduction process is inhibited in the advanced VTS of the category of "AHDVTS_CAT=0010b".

The "advanced VTS which is not accompanied by the advanced contents" in which the category is indicated by "AHDVTS_CAT=0011b" indicates the advanced VTS which can be reproduced only by itself basically without accompanying the Markup language. In this case, it is assumed that an advanced VTS which can maintain reproduction compatibility between the other recording standard (which is called a VR standard) such as DVD-VR/HDDVD-VR and the reproduce-only standard (which is called a video standard) in the embodiment of this invention is used. The video standard and the VR standard are different from each other since the applications thereof are different (the interactive property is emphasized in the case of the video standard and the editing function is emphasized in the case of the VR standard). By commonly using the advanced VTS which is simplified in configuration for the two standards, the reproduction compatibility can be attained for the two standards whose objects are different. For example, in a recording equipment based on the VR standard, an information recording medium recorded in an advanced VTS mode can be reproduced by use of any type of reproducing apparatus.

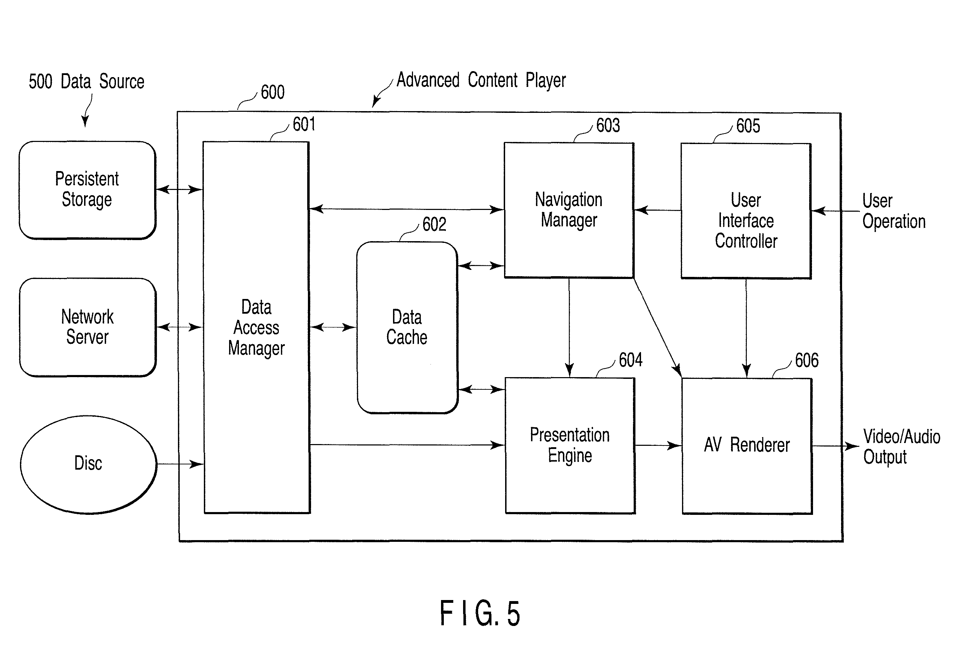

FIG. 5 is a diagram showing a reproduction system model of an HD_DVD player according to one embodiment of this invention by use of function modules of large units. A "Data Source" 500 indicates the data storage location which can be accessed when the HD_DVD player performs the reproduction process. As the "Data Source", a "Disc", "Persistent Storage", "Network Server" and the like may be provided. The "Disc" corresponds to the disc 1 shown in FIGS. 1 to 4.

NAS (Network Attached Storage) or the like which is provided on the home network is contained in the range of the "Persistent Storage". The "Network Server" indicates a server which is present on the Internet and is generally assumed as a server managed by a movie making company or the like which provides DVD discs.

An "Advanced Content Player" 600 indicates all of reproduction system models of the HD_DVD player and is configured to include a "Data Access Manager" 601, "Data Cache" 602, "Navigation Manager" 603, "Presentation Engine" 604, "User Interface Controller" 605 and "AV Renderer" 606 as large modules.

The "Data Access Manager" 601 manages transfer of data between the "Data Source" 500 and the module in the "Advanced Content Player" 600. The "Data Cache" 602 is a data storage equipment which temporarily stores data required for reproduction by the "Navigation Manager" 603 and "Presentation Manager" 604.

The "Navigation Manager" 603 reads out and interprets "Advanced Navigation" to control the "Presentation Engine" 604 and "AV Renderer" 606 and manages the reproduction control operation of the disc of the contents type 2 or 3. Further, it reads out a "Startup File" stored on the disc at the disc insertion time and makes the setting of an HD_DVD player required for the reproduction control operation.

The "Presentation Manager" 604 reads out a "Primary Video Set", "Secondary Video Set" and "Advanced Element" data from the "Data Source" 500 by use of the "Data Access Manager" 601 based on a control command and signal generated from the "Navigation Manager" 603 according to reproduction control information of the "Advanced Navigation". Further, it reads out data from the "Data Cache" 602, reproduces the data and supplies an output thereof to the "AV renderer" 606.

The "AV renderer" 606 performs the α blending and mix control operations of video data and audio data output from the "Presentation Engine" 604 based on a control command and signal generated from the "Navigation Manager" 603 according to reproduction control information of the "Advanced Navigation". Further, it supplies a signal output from the last HD_DVD player to the external TV monitor or speaker.

The "User Interface Controller" 605 transmits an input signal from the interface such as a mouse, front panel or remote controller as an event to the "Navigation Manager" 603. Further, it controls display of the mouse cursor.

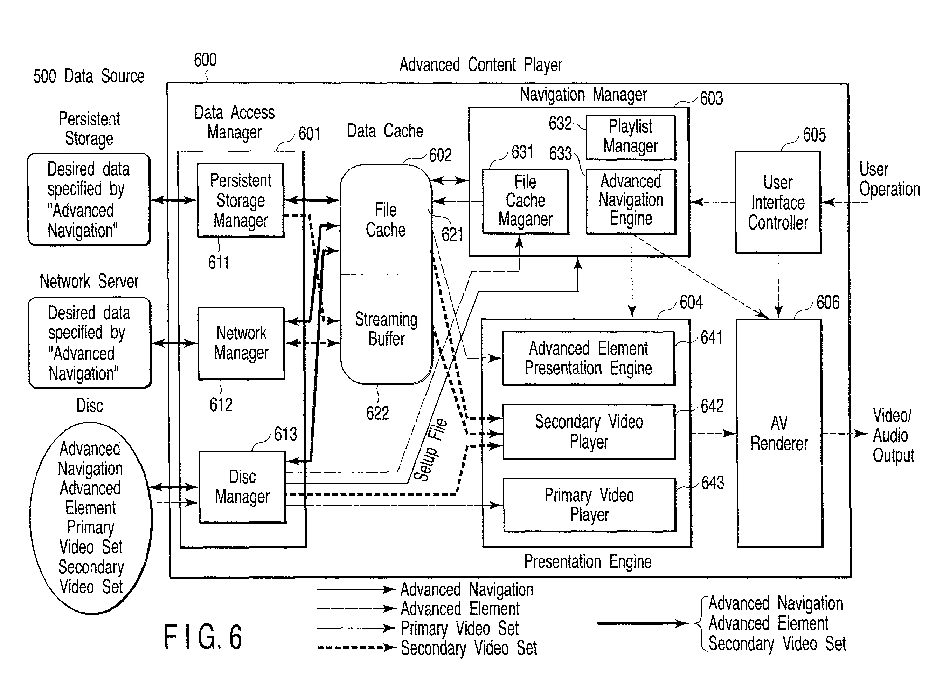

FIG. 6 is a diagram showing the blocks of FIG. 5 in detail from the viewpoint of a data flow. In the "Persistent Storage" and "Network Server", data items of various types can be stored, read out and written by use of the HD_DVD player as far as the data storage capacity permits as the result of the reproduction control operation of the "Advanced Navigation". Generally, as data read out by the "Advanced Control Player" 600 and used for reproduction, the "Advanced Navigation", "Advanced Element" and "Secondary Video Set" described before can be provided. The "Primary Video Set" is stored only on the disc and is not stored in the "Persistent Storage" and "Network Server".

As data stored on the "Disc", "Advanced Navigation", "Advanced Element", "Primary Video Set" and "Secondary Video Set" can be provided.

The "Disc" is a read-only medium and no data is written therein by the reproduction control operation of the "Advanced Navigation".

The "Data Access Manager" 601 contains a "Persistent Storage Manager" 611, "Network Manager" 612 and "Disc Manager" 613. Generally, they manage data accesses from the "Persistent Storage", "Network Server" and "Disc". However, it is possible to consider that the "Persistent Storage Manager" 611 manages data access by use of the function of the "Network Manager" 612 with respect to "network attached storage (NAS)" contained in the "Persistent Storage".

A line extending from the "Disc Manager" 613 to the "Navigation Manager" 603 indicates a flow of a "Startup File" contained in the "Advanced Navigation" read out by the "Navigation Manager" 603 after the determination process of a preset disc type at the disc insertion time. A line extending from the Disc manager 613 to a Primary Video Player 643 indicates a flow of data of the "Primary Video Set". A line extending from the "Disc manager" 613 to a "Secondary Video Player" 642 indicates a flow of data of the "Secondary Video Set" interleaved in a "Multiplexed Data Structure" on the Disc.

A line extending from the "Disc Manager" 613 to a "File Cache Manager" 631 indicates a flow of data of an Advanced Element interleaved in the "Multiplexed Data Structure" on the "Disc". A line extending from the "Disc Manager" 613 to a "File Cache" 621 indicates a flow of data of the "Advanced Navigation", "Advanced Element" and "Secondary Video Set" which are not contained in the "Multiplexed Data Structure" on the Disc.

Lines extending from the Persistent Storage and Network Server to the File Cache 621 via the Persistent Storage Manager 611 and Network Manager 612 indicate a flow of data of the Advanced Navigation, Advanced Element and Secondary Video Set and a flow of data in the opposite direction. Further, lines extending from the Persistent Storage and Network Server to a Streaming Buffer 622 via the Persistent Storage Manager 611 and Network Manager 612 indicate a flow of data of Secondary Video Set.

A line extending from the File Cache 621 to the Navigation Manager 603 mainly indicates a flow of the Advanced Navigation read out and fetched by the Navigation Manager 603. A line extending from the File Cache Manager 631 to the File Cache 621 indicates a flow of data when data of the Advanced Element supplied from the Disc Manager 613 to the File Cache Manager is written into the File Cache 612 in the file unit.

A line extending from the File Cache 621 to an Advanced Element Presentation Engine 641 indicates a flow of the Advanced Element. A line extending from the File Cache 621 to a Secondary Video Player 642 indicates a flow of data when video data (S-EVOB) and time map (TMAP) of the Secondary Video Set temporarily stored in the File Cache 621 as file data are reproduced.

A line extending from the Streaming Buffer 622 to the Secondary Video Player 642 indicates a flow of data obtained by temporarily reading out a large Secondary Video Set stored in the Persistent Storage or Network Server into the Streaming Buffer bit by bit and then supplying the thus readout data to the Secondary Video Player. This is a measure for absorbing a fluctuation of the data readout speed and making it difficult to interrupt reproduction of the Secondary Video Set when data is supplied from the Data Source such as a network in which the data readout speed is not constant.

Dotted lines extending from an Advanced Navigation Engine 633 to the Presentation Engine 604 and AV renderer 606 indicate a flow of control signals. When the control signal is supplied to the Presentation Engine 604, data of the text sub title stored in the Advanced Navigation data configured by the Markup/Script may be supplied in some cases.

Therefore, according to the above model, a file or archived data read out into the data cache by use of the playlist (it is possible to form plural types of playlists) can be set so as to be combined with data fetched from the exterior and reproduced. Even when the number of types of the contents of a resource recorded on the disc is one, the resource can be reproduced by plural types of sequences by describing a plurality of playlists. Further, it can be reproduced in combination with graphics video data fetched from the network or input via an operation input. Since version-up of information fetched from the exterior can be attained, the resource and playlist can be designed by taking the future application state thereof into consideration when they are designed.

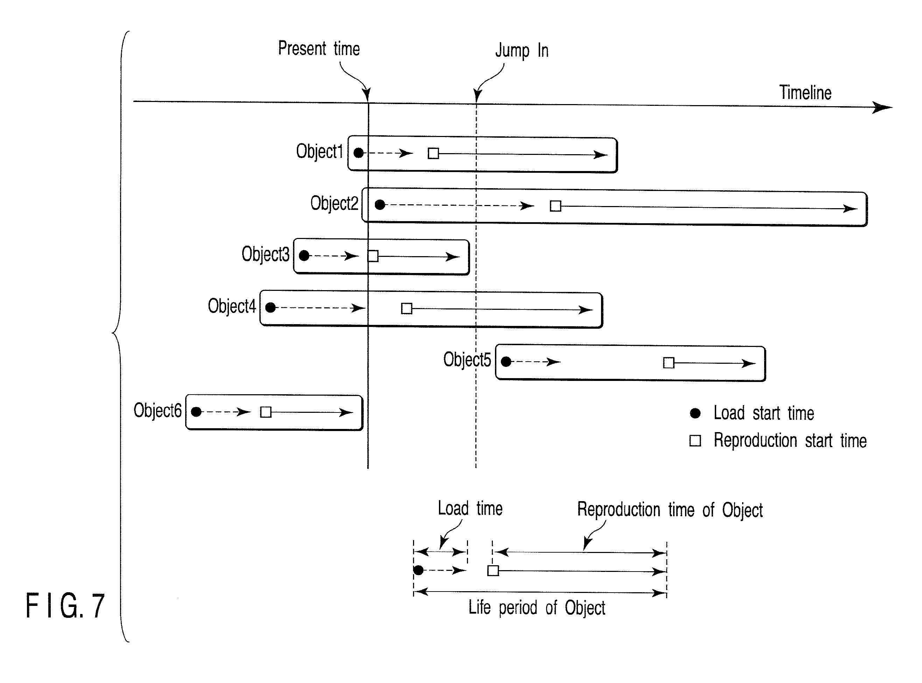

FIGS. 7 to 14 are diagrams for explaining the playlist.

Reproduction time and load time are described in the Playlist. That is, in one embodiment of this invention, the amount of Data Cache used can be measured (or detected) by describing the readout time in information of the Playlist. Thus, contents can efficiently be formed at the authoring time by utilizing the result of measurement (detection) of the amount of Data Cache used. Further, the performance of the Player can be enhanced by continuously storing an Object which is not required to be deleted in the Data Cache. This is explained below.

FIG. 7 is a diagram showing a load start time and reproduction time of respective objects on the Timeline. In a case where a jump is made from the present time, expressed by a solid line in the drawing, to a portion expressed by dotted lines, it is not necessary to consider an Object 3 and Object 6 since the reproducing operations thereof have already finished.

Further, it is not necessary to consider an Object 5 since the Load start time has not arrived yet. In the Object 1, the Load operation is started and is not ended at the present time, but the Object is set in the course of reproduction at the jumping time. Therefore, the same contents as those of the Object 1 which are provided in another file are loaded and reproduced. Since the jump is made in a period in which an Object 2 is being reproduced, the reproducing operation is started after at least the loading operation for the Object 2 from the Load start time to the jumping time is completed.

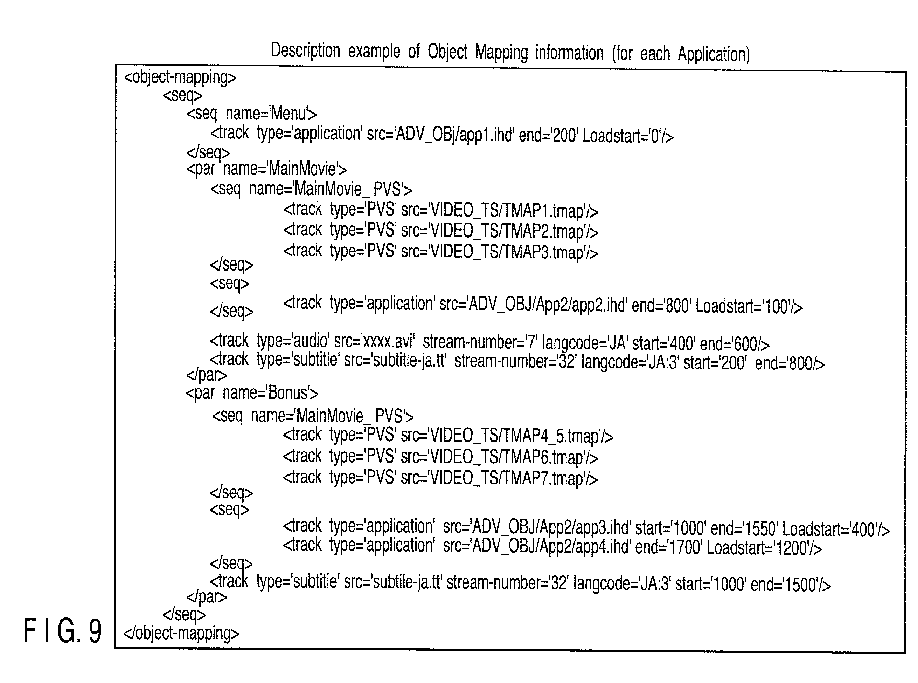

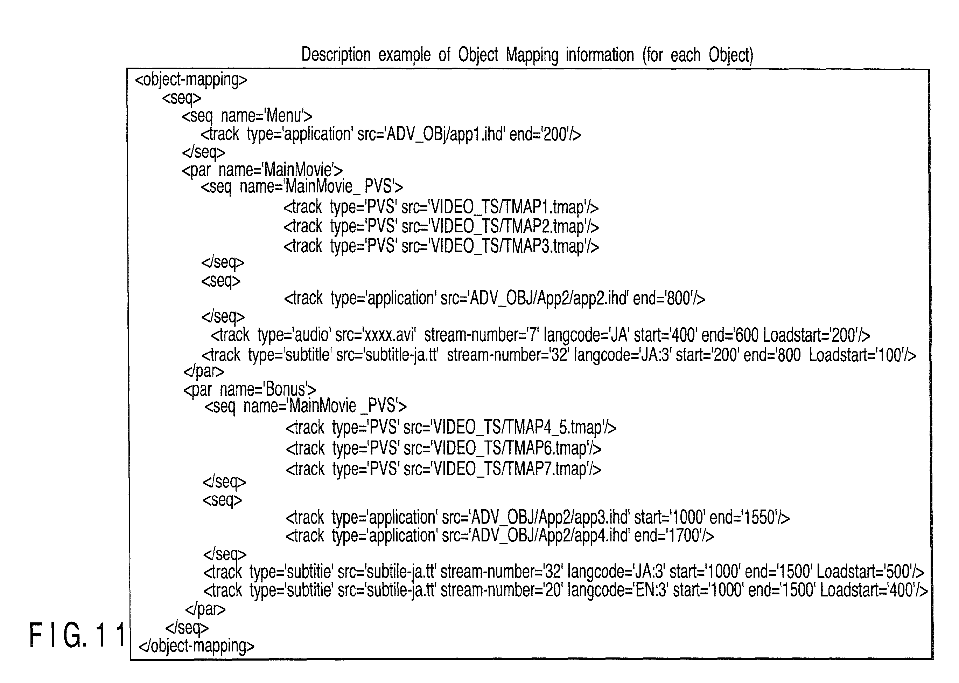

In an Object 4, since the jump is made at time at which the Loading operation is completed, the Data cache is searched to detect the Object 4, and if the presence of the Object 4 is detected, the reproduction operation is performed. This is realized by attaching a Loadstart attribute (refer to FIG. 9 or 11) to the description of the Playlist.

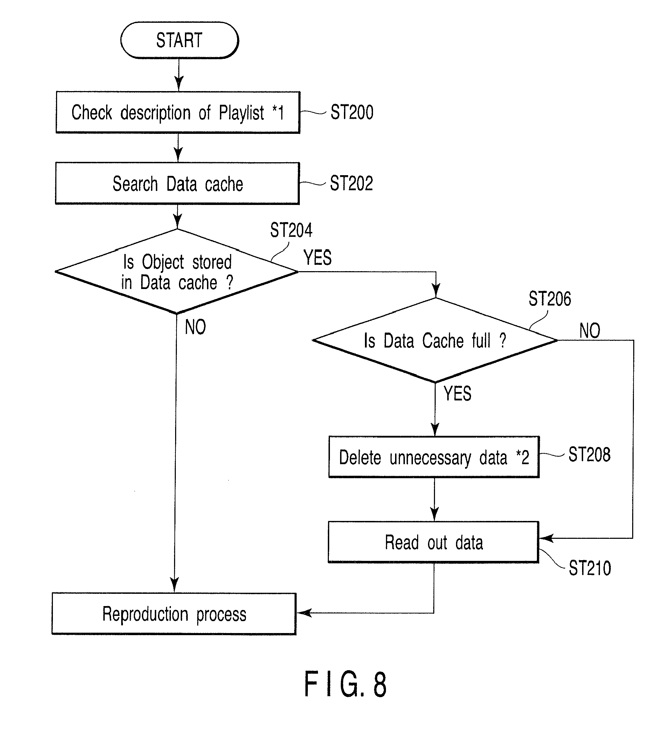

FIG. 8 is a flowchart corresponding to the above process. When the jump operation is performed, the description of the Playlist is checked (step ST200), and the searching operation is performed to determine whether or not an Object is stored in the Data Cache (step ST202). If an Object is stored in the Data Cache ("YES" in the step ST204), the reproduction operation is performed by use of the Object.

If no Object is stored in the Data Cache ("NO" in the step ST204), whether or not a margin for data storage is provided in the Data Cache is checked (step ST206). When the data cache is full ("YES" in the step ST206), an unnecessary Object is deleted (step ST208), necessary data is read out from the prepared file into the Data Cache (step ST210) and the data is reproduced.

If a margin is provided in the Data Cache ("NO" in the step ST206), the Object is not deleted from the Data Cache, necessary data is read out into the Data Cache (step ST210) and reproduced. As a result, even when the size of the Data Cache which can be used at the same time is determined, contents stored in the Data Cache can be searched for and used when the contents become necessary again due to the jump operation or the like because a Data Cache of larger size then the Data Cache can be used at the same time is provided for each equipment and the stored contents are not deleted. Thus, the ability of the Playlist can be enhanced by sufficiently increasing the capacity of the Data Cache. As a result, the apparatuses can be differentiated from one another.

Further, since the amount of Data Cache used for each certain time period can be calculated (by adding Loadstart attributes to the Playlist), a further Object can be set in a location in which a margin is provided in the capacity of the Data Cache at the contents formation time and thus the efficient contents formation process can be performed.

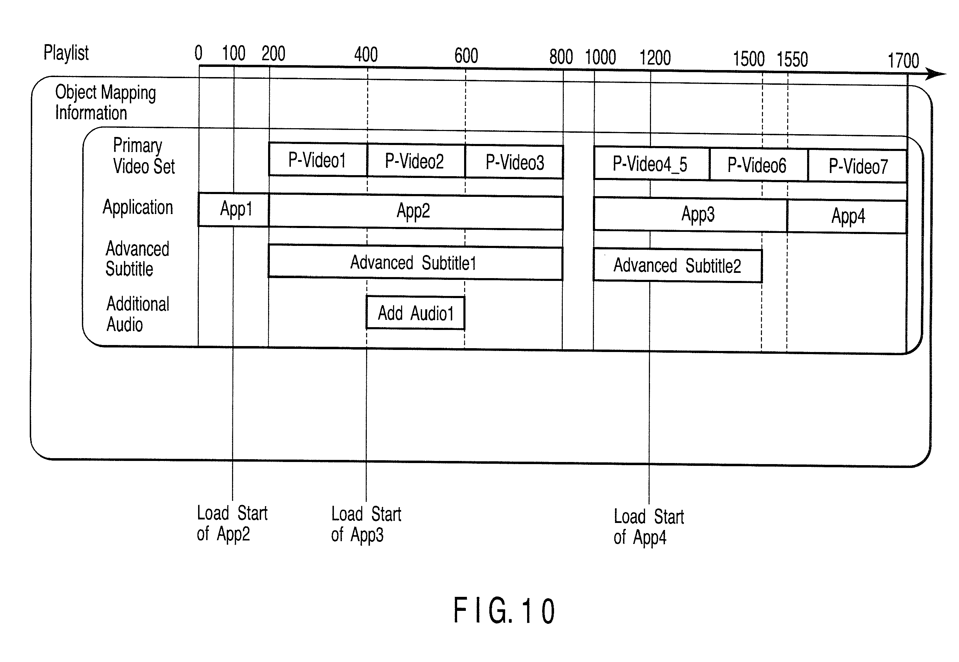

FIGS. 9 and 11 each show a concrete example of the Playlist to which the Loadstart attributes are attached. FIGS. 9 and 10 show a case wherein Loadstart time is prepared in the large Application unit as an example. In this case, Objects used in the respective Applications are loaded into the Data Cache at the same timing from the Load start time (Loadstart '0', Loadstart '100', Loadstart '400', Loadstart '1200' and the like in FIG. 9). Since the Loadstart of the Application 1 starts from '0', it is considered that the Loadstart can be omitted (with the Loadstart '0' set as a default).

FIG. 11 shows an example in which the Load start time (Loadstart '200', Loadstart '100', Loadstart '500', Loadstart '400' or the like) is set for each Object. If the description is thus made, a finer control operation can be performed (in comparison with the example for each Application of FIG. 9). However, in this case, since it becomes necessary to perform a readout process or delete process for each object, the process on the reproduction-series side becomes complicated. Further, when the Load start time is set for each object, data is sequentially deleted in an order of data which is read out earlier in a simple example. However, when a special example is considered, the order of deletion can be prescribed. For example, a rule can be made such that data whose capacity is smaller than preset capacity is not eliminated and can be kept stored in the Data Cache and data which is allocated plural times at the reproduction time is not deleted. Further, explicitly new attributes (which specify whether or not data can be deleted from the Data Cache) can be provided.

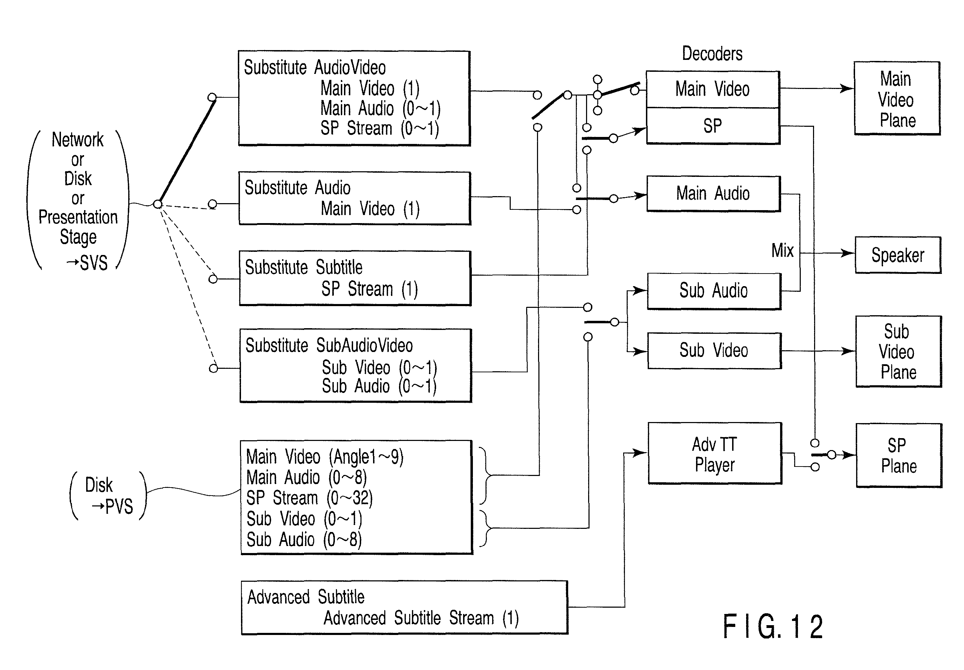

FIG. 12 shows an example of a system model. In this example, a primary video set (PVS) on the Disc contains nine angles of the Main Video, eight Main audios or less, 32 sub-picture (SP) Streams or less, one Sub Video or less, and eight Sub Audios or less. Further, as an secondary video set (SVS) existing on the Network, Disc or Persistent Storage, four items, i.e., Substitute AudioVideo (addition of Main Video, Main Audio, SP Stream), Substitute Audio (addition of Main Audio), Substitute Subtitle (addition of SP) and Substitute SubAudioVideo (addition of Sub Video, Sub Audio) are used according to the applications thereof. The number of Streams which can be set is shown as an example by use of parentheses in FIG. 12.

In the case of the Main Video, when both of the Main Video of the PVS and the Main Video of the AudioVideo are present, one of them is input to the decoder and they cannot be used at the same time. This applies to a case where a plurality of Angles are present (they are not used at the same time) and they are selectively used and displayed. The SP, Main Video are also selected in the same manner and decoded. They may be selectively switched in the course of reproduction. The Advanced Subtitle is decoded in the Adv TT Player, and when the SP Stream is present, one of them is selected and displayed on the SP Plane (sub video image display plane). Further, the Main and Sub Audios are mixed and supplied to the Speaker, the Main Video is supplied to the Main Video Plane (main video display plane) and the Sub Video is supplied to the Sub Video Plane (sub video display plane) and they are reproduced.

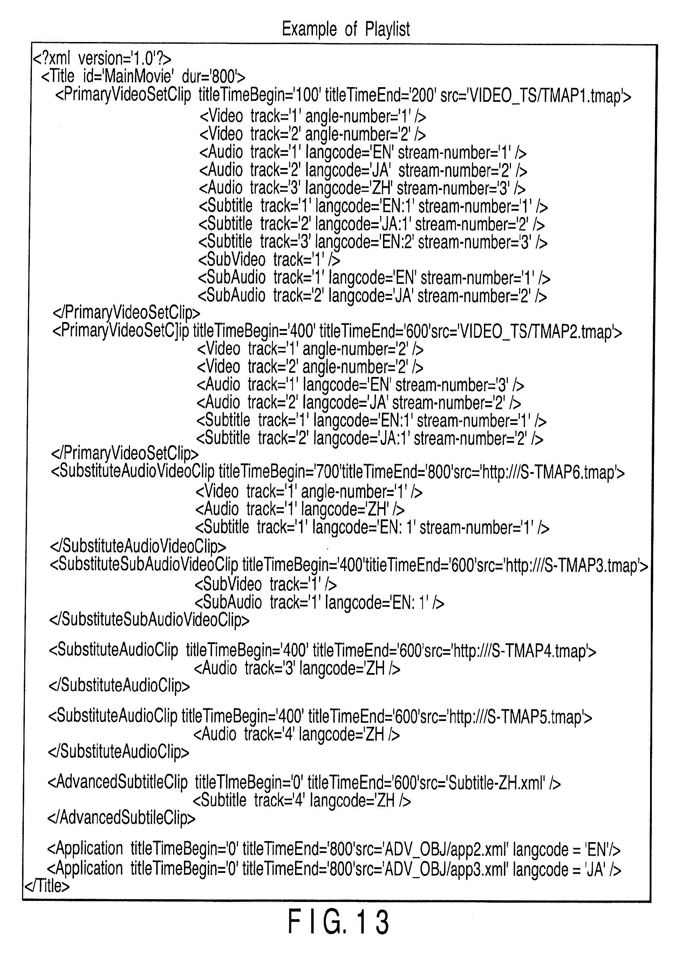

FIG. 13 shows an example of the Playlist which realizes the above reproducing operation. The length "800" of the Title TimeLine set as id of the Title in the Title tag directly under the route element is defined. Then, the PVS and SVS are set in the child element. First, the PVS is defined by use of PrimaryVideoSetClip. This is set in a period of 100 to 200 on the TimeLine and is referred to in a TMAP1.tmp file. The PVS has two angles in the Video, an Angle 1 is set in the track 1 and an Angle 2 is set in a track 2. Further, in the Audio, stream-numbers 1, 2, 3 are respectively set to the tracks 1, 2, 3 and langcodes of EN, JA, ZH are respectively attached thereto.
Likewise, in the Subtitle, stream-numbers 1, 2, 3 are respectively set to the tracks 1, 2, 3 and langcodes of EN:1, JA:1, EN:2 are respectively attached thereto.
The Sub video is set to the track 1, and in the Sub Audio, stream-numbers 1, 2 are respectively set to the tracks 1, 2.

Likewise, PrimaryVideoSet is set in a period of 400 to 600 on the Title TimeLine, SustituteAudioVideo is set in a period of 700 to 800, two SustituteSubAudioVideos and Sustitute Audios are set in a period of 400 to 600 a period of 400 to 600, and AdvancedSubtitle is set in a period of 0 to 600. Further, two types of Applications app2.xml and app3.xml are set in a period of 0 to 800.

The reproduction equipment can deal with a track having the same langcode as that of the Application as a reproduction track of the default by use of the langcode of the Application. If a corresponding track is not present, the reproduction operation can be performed without causing any problem by setting a track having the smallest number as a default, for example.

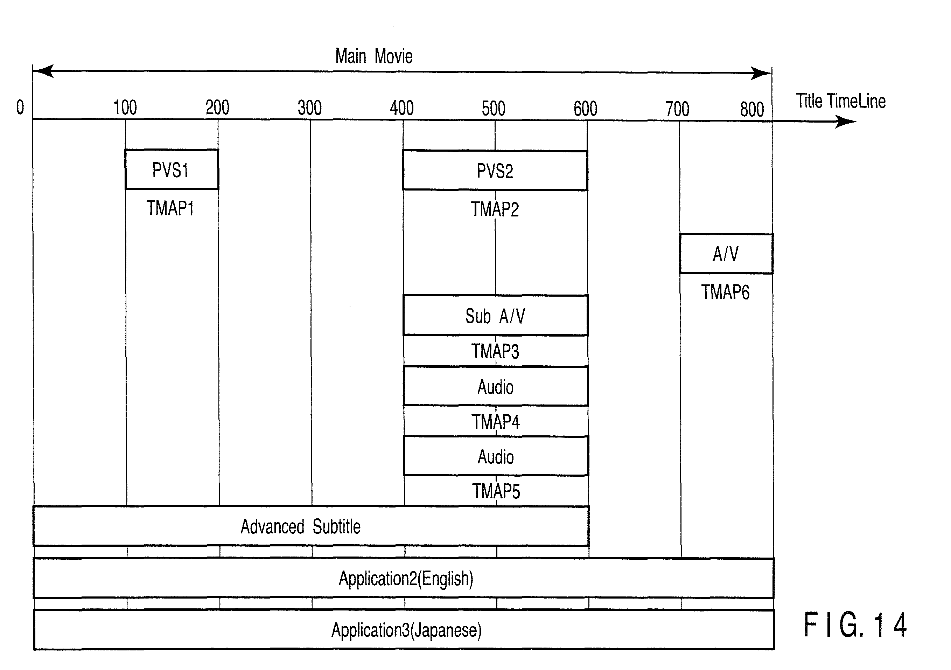

FIG. 14 is a diagram showing a case wherein the above example is arranged on the Title TimeLine. Streams are contained in respective Clips according to the respective Types. In this case, in PVS2 and two Audios of SVS arranged in a period of 400 to 600 on the Title TimeLine, the streams can be switched by setting different numbers to the tracks (in this example, PVS is set to 1, 2 and SVS is set to 3, 4) without causing the user to pay attention to PVS, SVS.

Even if a stream is present in PVS and is not described as a Track in the Playlist, the user cannot make a selection. Further, the replacement can be made by allocating the Track Number to SVS. Thus, the reproduction operation is permitted only when the condition of the Script of the Playlist is satisfied or reproducible contents can be controlled by changing the Playlists (without changing the Streams).

The management of the Playlist is carried out by use of the Playlist Manager of the Navigation Manager (refer to FIG. 6).

A File System is prepared in the File Cache Manager shown in FIG. 6. The File System manages a File or archived file (Archived file or Archived Data) stored in the File Cache according to the Playlist. That is, the write and readout operations of the file of the File cache are controlled according to a request from the Navigation Manager, Persistent Engine, Advanced Element Engine and Data Access Manager. The File Cache is part of the data cache and is used as a location which temporarily stores a file.

First, the File Cache is defined to have a storage area of at least 64 MB (mega bytes). The provider can design the capacity of the contents and management information by setting the minimum capacity of the File Cache. Further, in the File Cache, the size of one memory block is set to 512 bytes. The block size is determined as the consumption unit and even if a file of one byte is written, data of 512 bytes is allocated and consumed. Easy and high-speed access can be made by making access in the 512 byte unit. Further, address management can be easily carried out.

In the File Cache, a plurality of files of Archived Data and files of data items which are not archived can be dealt with. The name of the Archived Data has a file name expressed by eight characters and an extension expressed by three characters and is a unique file name in the disc. Further, the name of the file in the Archived Data is expressed by 32 bytes (including the extension). The maximum file size is 64 MB. Further, it is determined that the maximum number of files is 2000 on the disc and is 2000 in the archive.

The resource is managed based on the following information. That is, the information includes mapping information on the Title TimeLine described in the Resource Information managed by the Playlist Manager, and a Delete List and File list described in the Resource Management Table managed by the File Cache Manager.

When the access from the application programming interface (API), is executed the data under the management of the playlist manager which is only for readout. A file in the temporary directory (Temp directory) prepared as the API directory can be read out and written.

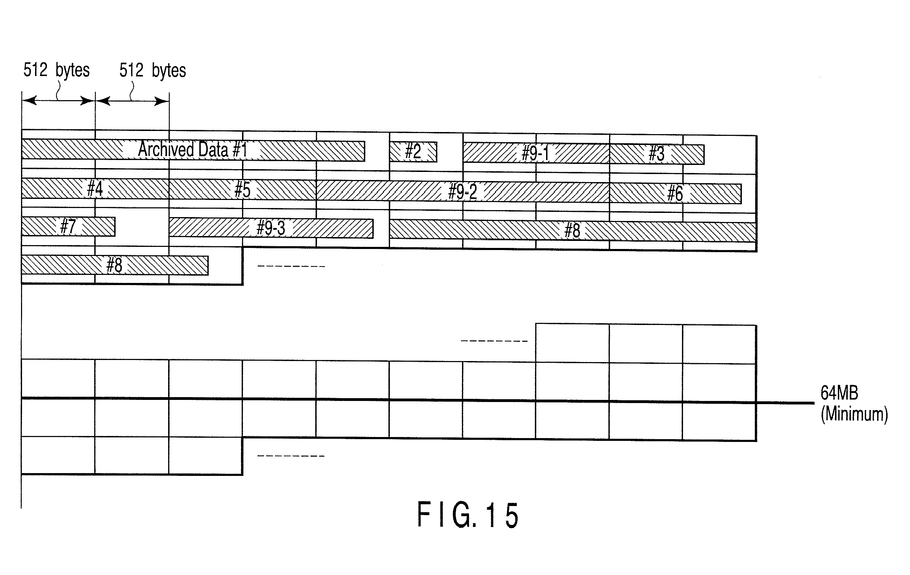

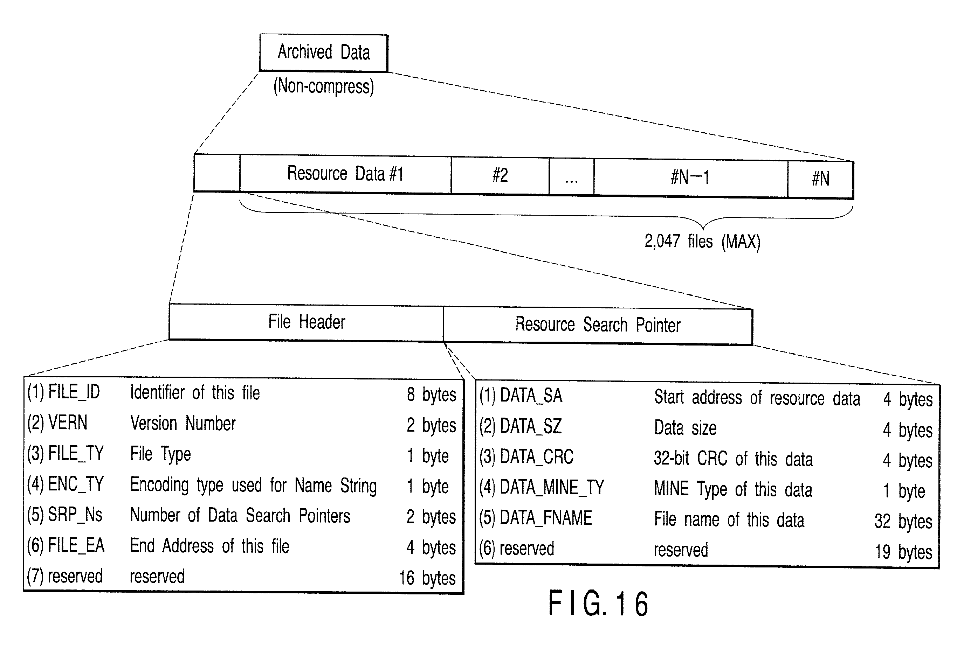

FIG. 15 shows an image of the file or archived data stored in the File Cache described above. FIG. 16 shows an example of the configuration of the archived data. A File Header and Resource Search Pointer are provided and Resource Data items (#1, #2, ...) are sequentially provided after this. The maximum file number of the Archived Data is limited to 2047. In the file header, a file identifier (FILE_ID), version number (VEN), file type (File_TY), encoding type (ENC_TY), search pointer number (SRP_Ns), end address of the file and the like are contained. In the resource search pointer, a start address of the resource data, data size, correction code (CRC) of the data, mine type (file type) of the data, file name of the data and the like are contained.

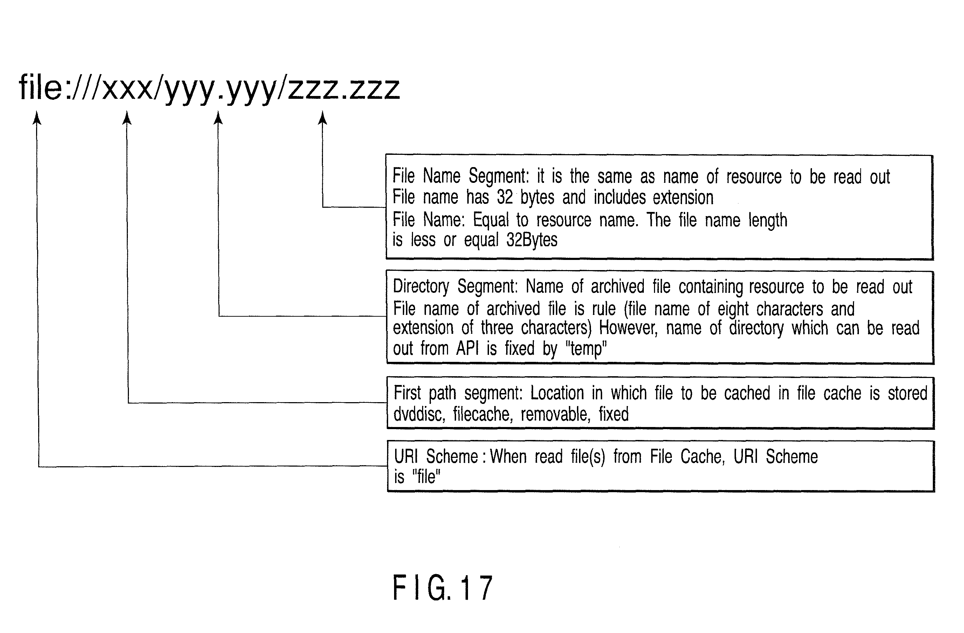

FIG. 17 shows a specifying method used when archived data is accessed, for example, when it is read out from the file cache. Specified data is described by use of a URI. In this case, the head end (left end) is described as "file". In FIG. 17, XXX is called a first path segment and the description indicates a location in which a file cached in the file cache is stored. For example, "dvddisc" (when it is stored in the disc), "filecache" (when it is stored in the file cache), "removable" (such as a memory medium), "fixed" (such as a contained memory) and the like are utilized. Further, yyy•yyy indicates an area which is called a directory segment and is the name of the archived file containing a resource to be read out. The file name of the archived file utilizes a rule of eight characters and an extension of three characters described before. The next ZZZ.ZZZ is called a file name segment. In this place, the same file name as the name of the resource to be read out is described. The file name is expressed by 32 bytes and contains the extension.

Only a desired file contained in the archived data can be accessed and read out by use of a specifying method based on the URI information (which is temporarily called resource specifying information). That is, the resource search pointer of the archived data and the resource specifying information are used. When the file specified by the resource specifying information is contained in the archived data, the searching operation is performed by use of a search pointer corresponding to the resource specifying information to read out a desired file.

Two types of areas used to access an area in the file cache by use of the URI are provided. One of the areas is a read-only area. The other area is a readable and writable area. The read-only area is an area in which the life period of the file is managed by use of the playlist manager. In this case, for example, file:///filecache/yyy.yyy/zzz.zzz is described. The readable and writable area is an area lying under the temporary directory. In this case, for example, file:///filecache/temp/zzz.zzz is described (when files are provided directly under "temp"). Further, file:///filecache/temp/yyy.yyy/zzz.zzz is described (when archived data is provided under "temp" and a file is contained therein), for example. For example, a file having a description of "Temp" therein is an erasable file if it becomes unnecessary after some event occurs. For example, an event occurs in response to a user operation input in a game in some cases. Since a temporary file used in the event can be erased without causing any problem, "temp" is used as specifying information of the file.

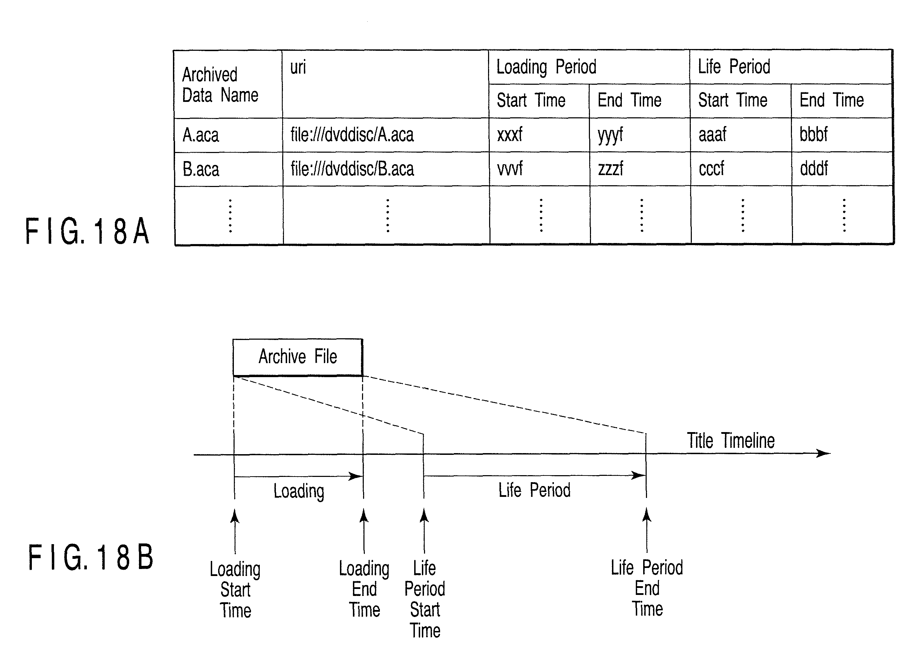

FIG. 18A shows an example of information used when the file cache manager forms resource information. Information as to the readout and erase operations of the resource into the file cache is acquired by the playlist manager and the readout and erase operations of the resource are performed based on the start and end time (Start/End Time) of the Loading Period on the Timeline and the start and end time (Start/End Time) of the Life Period. FIG. 18B shows an example of the loading period and life period on the timeline of the archived file.

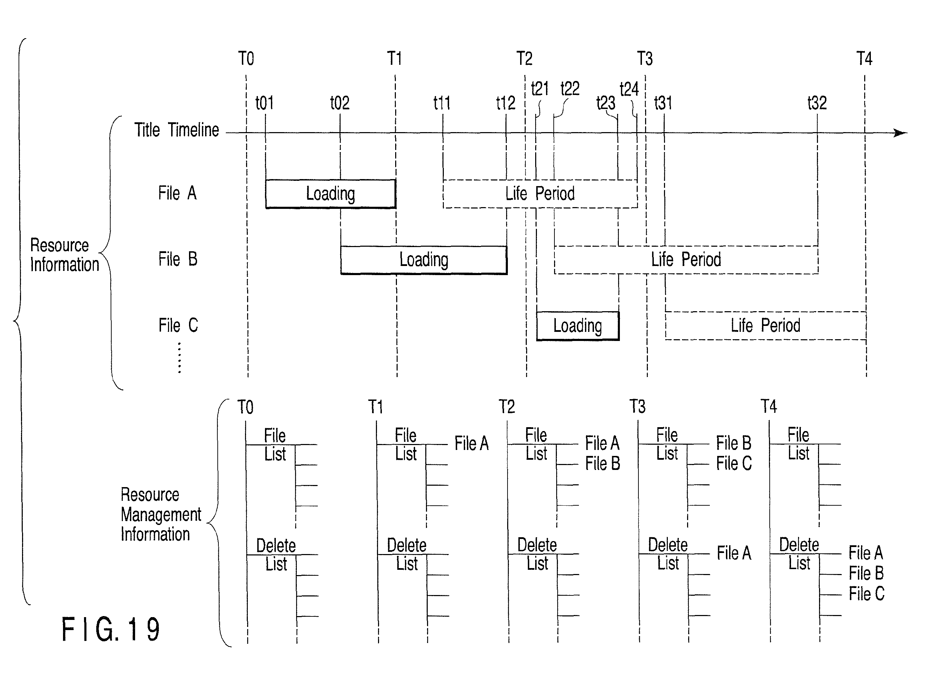

FIG. 19 is an explanatory diagram for illustrating the Resource Information managed by the Filecache Manager and Playlist Manager. The resource information is used to manage a plurality of files on the Title Timeline. It is now assumed that the loading period of a file A is set to t01 to T1 and the life period is set to t11 to t24. Further, it is assumed that the loading period of a file B is set to t02 to t12 and the life period is set to t22 to t32. It is assumed that the loading period of a file C is set to t21 to t23 and the life period is set to t31 to T4.

Then, the file A is registered in the file list at the time point T1 on the resource management information (since the loading process of the file A is completed).

At the time point T2, the files A, B are registered in the file list (since the loading process of the files A, B is completed). Further, at the time point T3, the files B, C are registered in the file list (since the loading process of the files B, C is completed) and the file A is registered in the Delete List (since the file A has passed through the life period). At the time point T4, the files A, B, C are registered in the Delete List (since the life periods of the files A, B, C have been passed).

As described above, the resource management information contains descriptive areas of a delete list and file list. Therefore, even a file whose life period has elapsed can be reused. That is, a file used for reverse reproduction or repetitive reproduction can be stored in the file cache. In other words, the actual state of a file which is registered is left behind simply by re-registering the file from the file list into the delete list although the life period thereof has elapsed.

Thus, the number of accesses to the recording medium can be reduced. Further, if data acquired from the broadcasting media is once discarded, it cannot be acquired again unless it is broadcasted again.
However, data supplied from the broadcasting media can be utilized many times by managing the file or data by use of the above method. Data to be utilized includes various data items such as audio and video data, graphics data, script and application. A file which becomes necessary due to the jump operation or reuse is re-registered from the delete list into the file list. The update timings are set to timing of the end of loading and timing of the end of the life period. For example, the title timeline utilizes time of the timer which is used as a reference of the apparatus. Of course, the timer is preset to an adequate time at the restart time when a reverse high-speed reproduction process or jump process is performed.

As the capacity of the file cache becomes larger than 64 MB, a larger amount of storage data can be increased.

The number of files registered in the delete file is limited by the capacity of the file cache and the amount of the file cache occupied by data. The file cache manager acquires information of the capacity consumption amount of the file cache. When the remaining capacity becomes smaller than a preset amount, for example, old files registered in the delete list can be sequentially deleted. The deleting means is also contained in the file cache manager and setting of the file to be deleted and deleting timing is determined on the manufacturer side who sets the archived file or the like.

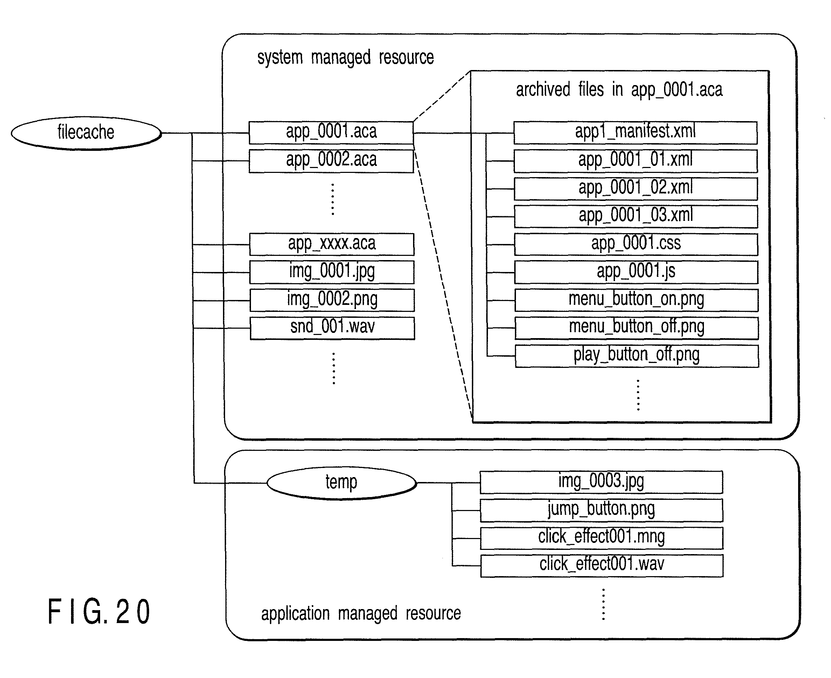

FIG. 20 shows an example of the directory structure in the file cache. The directory is roughly divided into a system managed resource and application managed resource and they are managed. The application managed resource is mainly specified by use of the resource specifying information (URI) containing "temp" explained before. As described above, it becomes easy to obtain information of the area application state of the file cache by arranging the system managed resource and application managed resource in different directories. In the case of the application managed resource, it may be deleted in many cases after it is used. Further, since a large number of files having a small data amount is provided, time required for reading/writing data with respect to the file cache can be made short. Therefore, when the memory space of the file cache is effectively used, it is possible to relatively easily delete the used application managed resource. The directories are separately classified and managed by use of "temp", but this is to attach the name so as to easily make access from API or the like. In practice, the system managed resource and application managed resource can be stored in the file cache without distinguishing them.

As described above, the file cache manager registers specified information of the resource within the life period into the first list and registers specified information of the resource whose life time has elapsed into the second list. Therefore, the resource whose life period has elapsed can be held in the file cache as far as the storage capacity of the file cache permits. That is, even when the resource whose life time has elapsed is required to be reproduced, it is not necessary to newly read out the resource from the storage medium.

This invention is not limited to the above embodiments as it is and can be embodied by modifying the constituents without departing from the technical scope thereof at the embodying stage. Further, various inventions can be made by adequately combining a plurality of constituents disclosed in the embodiments. For example, some constituents can be omitted from all of the constituents disclosed in the above embodiments. In addition, the constituents disclosed over the different embodiments can be adequately combined.

## Claims

1. An information reproducing method for a reproducing apparatus which includes a data access manager, a file cache which temporarily stores a plurality of resources acquired by the data access manager, and a navigation manager which processes management information used to manage a plurality of files held in the file cache and controls the data access manager, **characterized by** comprising:
defining a timeline (Title Timeline),
causing playlist information which maps the plurality of resources on the timeline to be included in the management information,
causing the navigation manager to load and map the plurality of files in the file cache according to the playlist information,
registering information which specifies the resource in a life period into a first list when the loaded resource lies within the life period, and
registering information which specifies a resource into a second list and managing the same if the resource has passed through the life period.

2. The information reproducing method according to claim 1, **characterized in that** the navigation manager includes a playlist manager and filecache manager, the playlist manager manages information of a life period and loading period of the plurality of resources as resource information, and the filecache manager manages the first and second lists.

3. The information reproducing method according to claim 2, **characterized in that** the resource is archived data containing a plurality of files of different types.

4. An information reproducing apparatus **characterized by** comprising:
a data access manager,
a file cache (621) which temporarily stores a plurality of resources acquired by the data access manager, and
a navigation manager (603) which processes management information used to manage a plurality of files held in the file cache and controls the data access manager,
wherein a timeline (Title Timeline) is defined and playlist information which maps the plurality of resources on the timeline is included in the management information, the navigation manager (603) includes means for loading and mapping the plurality of files in the file cache (621) according to the playlist information, and means for registering information which specifies the resource within a life period into a first list when the loaded resource lies within the life period and registering information which specifies a resource into a second list and managing the same if the resource has passed through the life period.

5. The information reproducing apparatus according to claim 4, **characterized in that** the navigation manager (603) includes a playlist manager (632) and filecache manager (631), the playlist manager includes means for managing information of a life period and loading period of the plurality of files as resource information, and the filecache manager includes means for managing the first and second lists.

6. The information reproducing apparatus according to claim 5, **characterized in that** the minimum capacity of the file cache is previously defined to make it clear to design management information by use of the filecache manager.

7. The information reproducing apparatus according to claim 5, **characterized in that** the memory utilization unit of the file cache is previously set to a preset block unit to make it easy to access the file cache by use of the filecache manager.

8. The information reproducing apparatus according to claim 5, **characterized in that** the file cache receives the plurality of files from a data access manager (601).

9. The information reproducing apparatus according to claim 5, **characterized in that** the file cache receives the plurality of files from a data access manager (601) which includes a network manager (612).

10. The information reproducing apparatus according to claim 5, **characterized in that** the file cache receives the plurality of files from a data access manager (601) which includes a disc manager (613).
